# EUROPEAN PATENT APPLICATION

(11) **EP 3 176 542 A1**
(43) Date of publication of application: **07.06.2017**
(21) Application number: 15197350.0
(22) Date of filing: 01.12.2015
(51) Int. Cl.: G01C 22/00, G01C 15/00, G01C 15/06, G01S 17/08, A63C 19/06

(54) **ODOMETER FOR A VEHICLE**

(71) Applicant: Beamrider Limited, Malvern, Worcestershire WR14 1AT (GB)
(72) Inventor: McGuffie, Iain, Malvern, WR14 1AT (GB)
(74) Representative: Veni Swiss & European Patent Attorneys

(57) **Abstract**

An odometer and distance measurement device for a vehicle 1 are described. The odometer comprises a distance-determining device 2 configured to transmit a beam of radiation, such as a laser beam 13 and to determine, from reflected radiation of the beam 13 off a target surface 11 remote from the distance-determining device, a measurement value of the instantaneous separation distance Dₘ between a mobile measurement reference point 6, 11 of the vehicle 1 and a stationary measurement reference point 3 remote from the vehicle 1. The distance-determining device 2 is configured to be located at the stationary measurement reference point 3 and to direct the radiation beam 13 towards the remote target surface 11 located at the mobile measurement reference point 6,11, and the odometer device 2 comprises communication means 7 for wirelessly communicating the measurement value to a data receiving means 7' at the vehicle 1.

## Description

### Field of the invention

The invention relates to the field of distance meters which measure the distance to a target from a radiation beam emitter as a function of the reflected radiation beam off the target. In particular, but not exclusively, the invention relates to a distance meter for determining the distance travelled by a vehicle or mobile apparatus from a starting point. The invention can be applied for example to line-marking machines for sports fields.

### Background of the invention

Service vehicles or mobile apparatus such as construction plant, agricultural machinery and greenkeeping equipment are typically required to perform an operation (eg excavate a hole, spray a mark or take a measurement of the location of a landscape feature) at a precisely-defined distance from a reference point. The operator of the vehicle, or the control system of the vehicle, requires precise and up-to-date information about the distance from the reference point

In the following description, a line-marking machine is used as an illustrative example of such a vehicle or mobile apparatus (these terms are used interchangeably). A line-marking apparatus may comprise a trolley or wheeled chassis with a marking head for depositing a marking substance (eg spraying a paint) on to the ground over which it travels. Or it may comprise a hand-held spraying lance and back-pack pressure vessel. Such a line-marker may be used for marking sports fields, exhibition halls or parking lots, for example. The line-marking apparatus may be pushed and/or steered by an operator, or it may be operated under remote control, or it may operate autonomously, for example following a predetermined marking pattern under guidance of a navigation system such as the Beamrider laser guidance system for line-markers. In order to mark the surface accurately, for example with a precision of a few millimeters, the line-marker must be able accurately to determine the distance of its marking head from a predetermined reference point. For example, the line-marker may be tasked with marking a football pitch of 109.7m in length, with 23 transverse lines at a regular spacing distance of 4.57m. In this case, when marking the sidelines, the operator of the line-marker may need to measure the distance of travel of the marking head from the beginning of the line, and make tick marks every 4.57m for the subsequent marking of the transverse lines.

It has been standard practice, when marking a new sports field (ie where there is no existing marking to follow), to use measuring tapes or specially-marked string to find and mark the correct distances from the start of the side-line, for example. However, such solutions are slow and unreliable, and involve unwieldy equipment which may be laid out on muddy or wet surfaces and must then be cleaned and stowed. It is also known to use hand-held laser-based distance meters, which the operator of the line-marker, standing at the line-marker, can aim by eye at a stationary reference surface such as an advertising hoarding, and calculate the relative distance from the start of the line. Such hand-held laser distance-meters are capable of measuring distance to a high degree of accuracy and precision. However, their use as in odometers for mobile apparatus such as line-markers has proved inaccurate and slow, because the operator must to stop marking in order to take measurements, and make calculations for offsets due to the geometry of the mobile apparatus (eg spray head of the line marking machine) and the reference surface (eg advertising hoarding). For this reason, such devices are used to take measurements only infrequently during the operation of the apparatus.

There is thus a need for an odometer for a mobile apparatus or vehicle, such as a line-marking apparatus, which can achieve the accuracy and precision of a hand-held laser-based distance meter, while permitting frequent distance measurements and a fast and uninterrupted movement of the apparatus.

### Brief description of the invention

The present invention aims to overcome at least some of the disadvantages of prior art systems, and to meet the objectives described above. To this end, an odometer device according to the invention is described in the attached claim 1, and a distance measurement system according to the invention is described in claim 11.

Further variants of the invention are described in the dependent claims. By mounting a laser-based distance measuring device on a stationary reference point, remote from the vehicle or mobile apparatus, but continuously trained on the special target surface on the vehicle, the odometer is able to provide continuous updates of the instantaneous measurements to the vehicle wirelessly. Thus the odometer can provide the operator or the control system of the vehicle with highly accurate, precise distance measurements, updated at a high frequency, without the need for any special distance-measuring equipment aboard the vehicle, without adversely affecting the operating or speed of travel of the vehicle, and without requiring any control input or instructions to the distance measuring device from the vehicle.

The invention will now be described in more detail with reference to the attached drawings, in which:
Figure 1 shows an example of a mobile line-marking apparatus using an odometer according to the invention.
Figure 2 shows an example of a target pattern for use with an odometer according to the invention.
Figures 3 and 4 show plan and side views respectively of an example of an odometer device according to the invention.
Figure 5 shows an example of a variant of the mobile apparatus of figure 1.
Figure 6 shows an example of a further variant of the mobile line-marking apparatus of figure 1.
Figure 7 shows an oblique view of the target shown in figure 6.
Figure 8 shows a first example of a variant of the mobile line-marking apparatus of figure 1 using multiple distance measuring means.
Figure 9 shows a second example of a mobile apparatus according to the invention, using multiple distance measuring means.

### Detailed description of the invention

It should be noted that the figures are provided merely as an aid to understanding the principles underlying the invention, and should not be taken as limiting the scope of protection sought. Where the same reference numbers are used in different figures, these are intended to indicate similar or corresponding features. It should not be assumed, however, that the use of different reference numbers is intended to indicate any particular degree of difference between the features to which they refer.

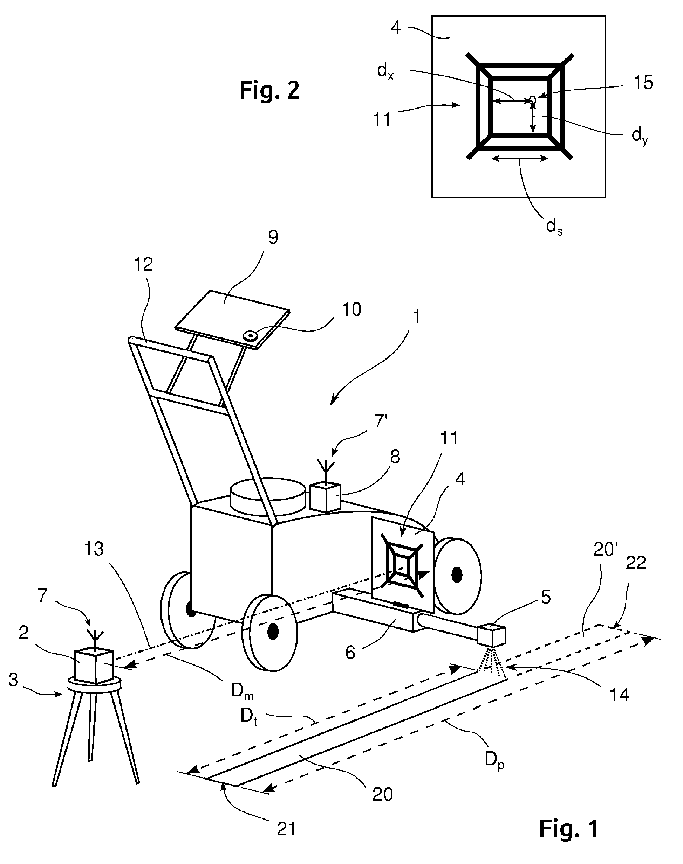

Figure 1 shows an example of a line-marking apparatus according to the invention. Such an apparatus may be used for marking lines on a sports field, for example. The illustrated apparatus 1 comprises a wheeled carriage which supports a lateral marking arm 6 on which is mounted a spray head 5 for applying a marking substance (eg paint) 14 to the ground surface over which the apparatus 1 travels. As shown in the illustration, the line-marking apparatus 1 may be used to mark a straight line of length Dₚ, beginning at starting point 21 and ending at end point 22. At the instant illustrated, a first portion 20, of length Dₜ, has been marked, while a second portion 20' of the planned line, of length Dₚ - Dₜ, has yet to be marked.

The apparatus 1 in this example is designed to be propelled and steered manually, by a human operator, using handlebar 12. A controller unit 9 controls the automatic and/or semi-automatic operation of the apparatus 1 and/or permits the operator to control certain functions of the apparatus 1. In this example, the controller 9 includes an odometer function which can be used, for example, to control the spraying status of the spray head 5. When the apparatus has travelled a certain distance, such that the spray head has reached the end 22 of the line to be sprayed, the controller either instructs the spray head to stop spraying, or it indicates the end-of-line-reached status to the operator, whereupon the operator can stop the spray head from spraying.

In order to calculate the distance-related marking-head control instructions, the odometer function of the controller 9 uses continuously or regularly updated instantaneous distance measurement information about where the apparatus is relative to a reference point 3, and/or about how far the apparatus has travelled from the reference point 3. As shown in figure 1, such information is provided by a stationary odometer device 2 located remotely from the main body of the apparatus 1 itself, with the distance measurement information being communicated from the remote distance meter 2 to the mobile apparatus 1 by a wireless communication link 7, 7' such as a radio or optical or ultrasonic link. The stationary odometer device 2 may be mounted on a stationary (stationary with respect to the frame of reference of the distance measurement to be made) platform or tripod 3, for example. As will be described below in more detail, the odometer device 2 comprises a contactless distance-measurement means, such as a laser-based distance meter, trained on a particular part of the apparatus referred to as the mobile reference point. In the illustrated case, apparatus 1 is provided with a planar target 4, arranged substantially orthogonal to the direction of travel of the apparatus 1. The odometer 2 comprises a laser distance meter, arranged to transmit its laser beam 13 to hit the target 4 and to measure the instantaneous distance Dₘ from the distance meter to the target surface 4 using known techniques such as round-trip time-of-flight measurement of the transmitted laser light reflected off at the target surface 4 and detected again at the distance meter. Distance measurements may be taken at an update rate which is suitable for the particular application of the mobile apparatus 1. If the apparatus is a line-marker, as in the example of figures 1 to 8, travelling at 2 ms⁻¹, for example, and the desired linear marking accuracy is +/- 4mm, where the accuracy of the distance meter is +/- 0.5mm, then a suitable distance measurement update rate may be approximately 40 or 50 Hz, for example. According to one variant of the invention, the controller 9 of the apparatus 1 may be provided with interpolation means for interpolating between successive received distance measurements and thereby increasing the accuracy of the distance travelled measurement Dₜ deduced from the received distance measurement information. In this case, the distance measurement update rate of the odometer 2 can be reduced. The interpolation means may use a simple first order or second order temporal interpolation, for example, assuming a substantially constant first order or second order velocity behaviour of the apparatus 1 (or, more accurately, of the target 4) along the direction of distance measurement. Alternatively, the apparatus 1 may comprise a motion sensor such as an accelerometer, in which case the interpolation means may use the motion sensor output to provide a yet more accurate interpolation between adjacent received distance measurements, taking into account variations in the motion of the mobile apparatus 1.

The distance measurements supplied by the odometer device 2 to the mobile apparatus 1 may be absolute distance measurements, or they may be data from which the absolute distance measurements may be derived, or they may be relative (eg incremental) distance measurements.

The controller 9 illustrated in figure 1 is provided with an offset or zeroing control 10, which may be activated by the operator of the mobile apparatus 1 to record a zero or starting point 21 for the measurement of distance Dₜ and thereby Dₚ. Following the setting of a zero or offset reference in the controller 9, the instantaneous value of Dm at the zero or offset reference point (eg 21) can be stored by the controller 9 and subtracted from subsequent distance measurements received from the odometer device 2. The offset/zeroing control 10 may be configured to perform more complex functions, such as storing multiple reference points, or an end point 22 in advance. Note that the direction of travel of the mobile apparatus can be in either the forwards or the reverse direction, and that the distance measurement can be made in the increasing sense (Dₘ increases with movement of the apparatus 1) or in the diminishing sense (Dₘ decreases with the movement of the apparatus 1).

Figure 1 shows an arrangement in which the distance-measuring laser 13 is substantially parallel to the path of the vehicle, and in this case to the line 20 to be marked. However, the odometer 2 could be arranged such that the laser 13 is oblique to the path of the vehicle. In this case, the odometer and/or the controller 9 may be configured to calculate the distance Dₜ trigonometrically from Dₘ, taking into account the angle of the laser beam 13 to the path of the apparatus 1.

As the mobile apparatus 1 moves over the ground surface, the motion of the target 4 with the apparatus 1 may result in a movement relative to the laser beam 13, such that reflection spot of the laser beam 13 on the target 4 appears to wander across the surface of the target and may even wander off the edge of the target 4 altogether. If this happens, a large and abrupt change in the distance measurement Dₘ is detected by the distance meter, and the odometer 2 may be configured to automatically stop transmitting distance measurement information if this happens. Instead, the odometer 2 may transmit an error code to indicate to the mobile apparatus 1 that no valid data is currently being transmitted. If the laser beam wanders back on to the target surface (or, more accurately, if the moving target surface 4 wanders back into line with the stationary laser beam 13), the odometer may detect that the distance measurements fall once again within an acceptable error margin of expected distance measurement Dₘ, and the odometer 2 may once again commence transmission of the distance measurement information.

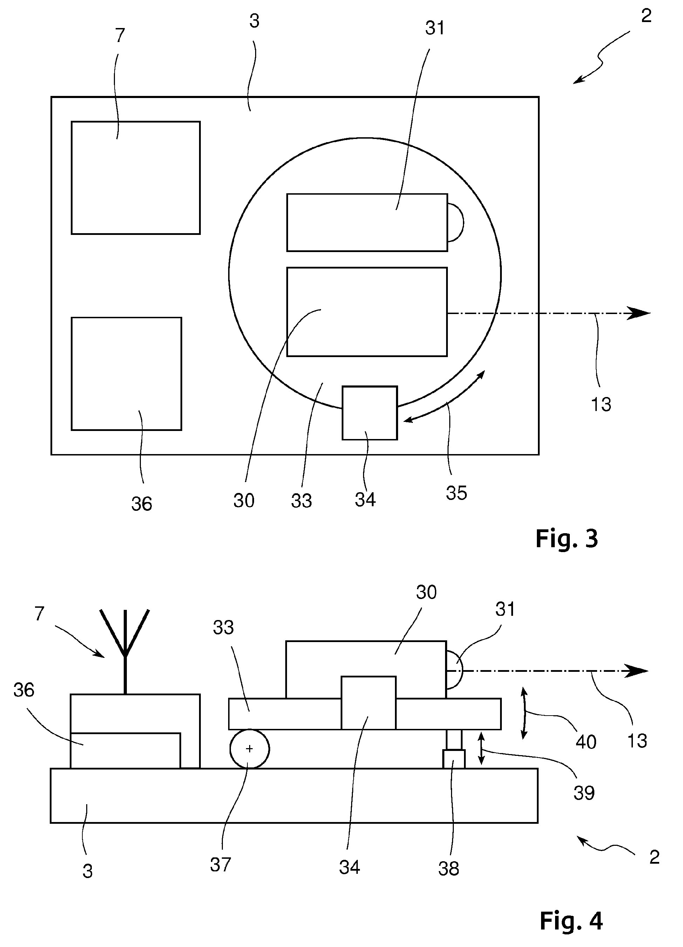

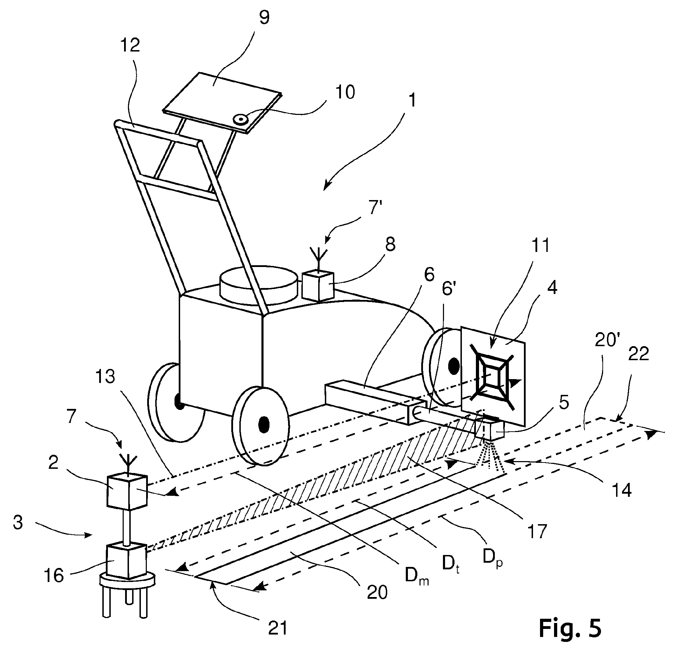

The odometer 2 is preferably equipped with laser training means for maintaining the laser beam 13 on the target surface 13. The term training is used here in its sense of maintaining the laser incident on the target. An example of such laser training means will be described in more detail in connection with figures 3 and 4. The laser training means may achieve the desired result mechanically or optically, for example, by changing a transmission angle of the laser beam 13, or by altering a transmission path of the laser beam 13, or by moving the laser transmitter or by any other suitable means. In order to keep the laser beam 13 trained on the target surface, the odometer device 2 is preferably provided with a pattern recognition means, such as a video camera or other imaging device with suitable optics, sensors and processing software for detecting a predetermined pattern 11 in an image of the target surface, and the target 4 is preferably provided with with a reproduction of the predetermined pattern 11 which is susceptible of being detected (recognised) by the recognition means. The recognition means is preferably configured to provide the training means with a training correction signal, which the training means can use for correcting or centering a position of incidence (spot) of the laser beam 13 relative to the target 4. According to one variant, the recognition means determines the training correction signal based on a position (for example an off-centre amount) of the recognised pattern in a field of view of the recognition means. According to another variant, the recognition means is provided with means for detecting the laser beam reflection (spot) on the target surface 4, and the spot's position relative to the predetermined pattern 11. With reference to figure 2, the recognition means may be configured to detect the relative positions dₓ and/or d_{y} of the spot 15 and the pattern 11 to each other on the target 4, and the training correction signal may be calculated (in the horizontal direction) as a function of (dₓ- dₛ/2), for example. A similar correction may be derived in the vertical direction from d_{y}. Due to unevennesses in the ground surface and in the steering of the apparatus, the line-marker 1 illustrated in figure 1 is likely to require training correction in both vertical and horizontal directions as it travels along the line 20 being marked. Some types of apparatus may only require correction in one direction (ie only horizontal, or only vertical), such as the apparatus which will be described with reference to figure 5. The training means described here may be configured with a hunt function for sweeping the pattern recognition means 31 through a predetermined sweep angle to seek the particular target pattern 11 and thereby to begin training the distance-measuring laser beam 13 on the target pattern 11. The sweep angle may be a simple angular sweep (eg 180 degrees) in a single (eg horizontal) plane, or it may comprise multiple sweeps through successive planes of a solid sweep volume, or any other sweep pattern suitable for finding and locking on to the target pattern 11. The laser beam 13 of the distance meter may be swept with the pattern recognition means during the hunt operation, for example on the same support. Alternatively, the laser beam 13 may be trained on to the target pattern 11 once the latter has been detected by the hunt operation.

Figures 3 and 4 show plan and side elevation views respectively of an example implementation of an odometer device 2 according to the invention. The device 2 comprises a stationary support or platform 3, on which are mounted distance meter 30 and pattern recognition means 31 on a displaceable (eg rotatable and/or tiltable) training means 33. Control unit 36 controls the operation of the distance meter and the pattern recognition means 31, and the communication unit 7 transmits distance measurement information to the corresponding receiver unit 7' at the mobile apparatus 1. Training means 33 is rotatable in the horizontal plane in the directions indicated by arrow 35 by means of a rotation drive means 34, such as a stepper motor, optionally with suitable reduction gearing. and in the vertical plane in the directions indicated by arrow 40 by tilting means 38 and pivot joint 37. According to one variant of the invention, the training means and/or the pattern recognition means may be adjustable to different distances to be measured. Thus, if Dₘ is very large, the pattern recognition means 31 may comprise a zoom or telescope means for enlarging the pattern 11 and/or spot 5 image. The zoom/telescope means may be optical or digital, for example, and may provide continuous or discrete step-wise scaling of the image. Similarly, the displacement means (eg rotation drive 34 and/or tilt means 38) may be adjustable dependent on the distance Dₘ being measured. At large values of Dₘ the displacement means may be adjusted to provide much finer displacement control of the training means 33. The fineness of the adjustment may vary continuously, or in one or more discrete steps, with Dₘ.

Figure 5 illustrates a further development of the example apparatus depicted in figure 1. In this example, the marking arm 6, 6' is extensible and operated under guidance such that the position of the marking head 5 is maintained over a predetermined path of the line 20 to be marked. The guidance may be provided for example by a stationary, vertically fan-shaped laser beam 17 as indicated by the hatched area of the figure. In this case, the marking head does not move significantly in the horizontal direction relative to the fan-shaped guidance laser 17. The transmitter unit 16 of the guidance laser 17 may be mounted on the same stationary support 3 as that of the odometer 2, as illustrated in figure 5, or they may be supported separately. In the illustrated arrangement, the distance-measuring laser 13 can be assumed to remain aligned with the target 4, at least in the horizontal dimension, and the training means of the laser beam 13 may plausible function without any horizontal adjustment. If the ground surface is even and flat, such as should be the case on a concrete, asphalt or indoor sports field, then the vertical motion of the target relative to the laser 13 can be assumed to be small, and the target 4 can be sized such that no vertical adjustment is needed. If neither horizontal nor vertical adjustment are needed, then the training means can be dispensed with. However, one reason for using a vertically fan-shaped guidance beam 17 for the marking head 5 is that the line-marker will typically encounter some vertical variation in the ground surface during its travel. Another reason is to minimise the amount of set-up time - a perfect vertical alignment of the guidance laser 17 with the detectors on the marking head 5 is not required. Even a good-quality football pitch may have variations in height of as much as a metre over its length, for example. Many fields are deliberately constructed with a higher "crown" in the middle, and lower peripheral areas, in order to improve drainage. For this reason, the line-marker shown in figure 5 will probably require training means for keeping the distance-measuring laser 13 on the target 4 in the vertical direction.

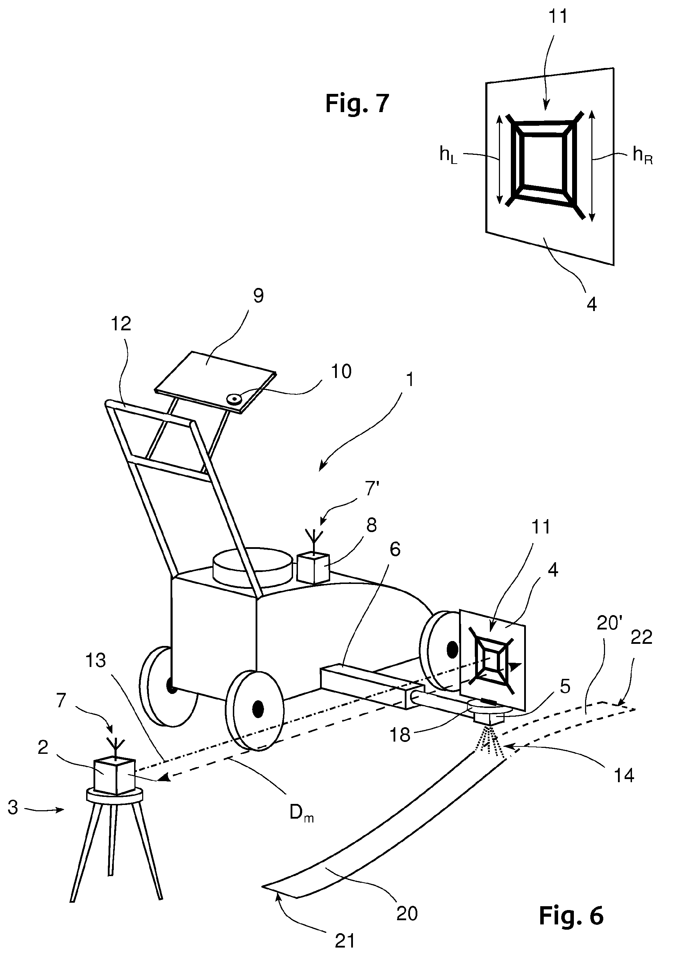

Figure 6 shows another example of a mobile apparatus used for line-marking. In this case, the line-marker 1 is being used to mark a curved line, whereas the line-markers of figures 1 and 5 were shown marking straight lines. In this case, the training means of the odometer 2 comprises a horizontal training means, for training the laser 13 on the target 4 as the marking head moves laterally with respect to the odometer 2 and its laser 13. As a variant, the pattern recognition means 31 of the odometer 2 may be provided with means for detecting an apparent distortion of the pattern due to an angular deviation of the target out of the plane orthogonal to the laser 13. Such a view is illustrated in figure 7. The pattern recognition means may comprise means for measuring an apparent difference between predetermined features in different parts of the pattern 11. In figure 7, the apparent heights h_{L} and h_{R} of the left-hand and righthand features of the pattern are different, for example, and the pattern recognition means 31 may be configured to determine the magnitude of this height difference in order to determine the instantaneous angular deviation of the target 11 from the plane orthogonal to the laser beam 13. The angular deviation may be used by the odometer to determine a line-length measurement of the curved line (as opposed to a linear measurement of distance travelled along a predetermined direction, as described with reference to figures 1 and 5). Alternatively, the pattern difference information (eg h_{R} - h_{L}) and/or the angular deviation information may be transmitted to the controller 9 for the latter to use in performing similar calculations.

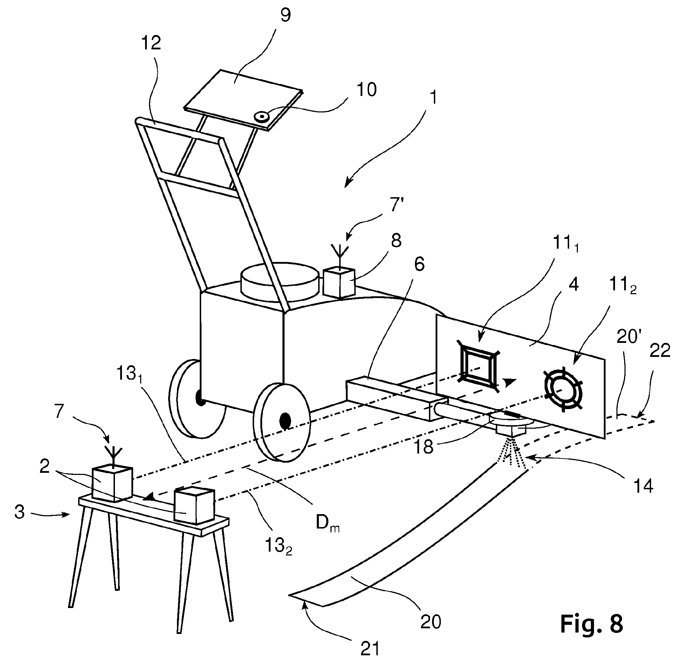

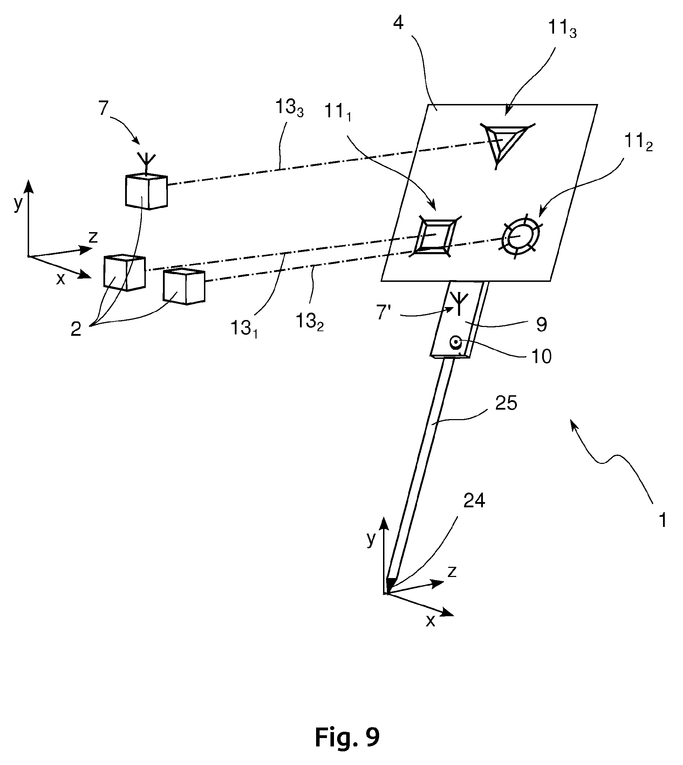

Figures 8 and 9 show further example variants of mobile apparatuses 1 according to the invention, in which the odometer 2 comprises more than one distance meter 30, each configured to be trained on a different target pattern. Multiple distance meters may be trained on their respective target patterns 11₁, 11₂, 11₃ using a common training means, or they may each be provided with separate training means. The training means may be configured to perform the hunt function described above. The target patterns 11₁, 11₂, 11₃ may be arranged on a common target surface 4, as shown in figures 8 and 9, or they may be arranged on separate target surfaces 4 of the mobile apparatus 1. The example illustrated in figure 8 shows how two laser distance meters may be used to determine the distance Dₘ using first and second laser beams 13₁ and 13₂ trained on first and second target patterns 11₁ and 11₂ respectively. The training means of each distance meter may advantageously be provided with a pattern recognition means 30 configured to recognise a particular one of the patterns 11₁, 11₂, and to train its respective laser beam 13₁, 13₂ on its respective target pattern 11₁, 11₂. The odometer 2 and/or the controller 9 can use the two sets of distance measurements from the distance meter to measure the angular deviation of the target 4 (in this case an angular deviation about a vertical axis). The two measurements may also serve to improve the accuracy of the distance measurement in the case where the target surface 4 remains substantially perpendicular to the laser beams 13₁, 13₂, or where the angular deviation of the target surface 4 is determined from the apparent distortion of the patterns 11₁ and 11₂ as described with reference to figure 7. Note that, while the laser beams in this example are advantageously arranged substantially parallel to each other, they could alternatively be arranged non-parallel. Similarly, the two distance meters 2 shown in figure 8 are advantageously arranged in a common plane substantially perpendicular to the direction of transmission of the laser beams 13₁, 13₂, but they could alternatively be arranged at separate stationary locations 3 independently. In the latter case, the odometer 2 and/or the controller 9 would preferably be configured to take the position of the distance meters and the orientations of the laser beams into account when using the distance information from the various distance meters to calculate the value of Dₘ and the angular deviation of the target surface 4.

Figure 9 shows an example of a variant of the invention which uses three distance meters, and which can be used to determine the position in one, two or three dimensions (eg one or more of the dimensions x, y and z shown), of a mobile reference point 24 of the mobile apparatus 1 with respect to a stationary reference point (eg a location of one of the distance meters 2). The pattern 11₃ shows an example of a pattern whose orientation and thereby the orientation of the target 4 as a whole, can be determined by the pattern recognition means of the respective (upper one of the three in this case) odometer device 2. In order to maintain the lasers 13₁, 13₂, 13₃ trained on the target 3, the odometer devices 2 may be mounted on a common support which is configured to rotate, while remaining stationary in the x, y, z frame of reference, so as to track movements of the target 4. Such a device may be used for example in surveying, and permits the operator to move about a site making measurements in one, two or three dimensions, without the need to control or to communicate to the odometer devices 2, which act as remote slave devices, automatically sending instantaneous distance measurements (and optionally instantaneous angular orientation data of the target) to the controller 9.

## Claims

1. Odometer device (2) for a mobile vehicle (1), comprising:
a distance determining device (2, 30) configured to transmit a beam of radiation (13) and to determine, from reflected radiation (15) of the beam (13) off a target surface (4) remote from the distance determining device (2, 30), a measurement value of an instantaneous separation distance (Dₘ) between a mobile measurement reference point (4) of the vehicle (1) and a stationary measurement reference point (3) remote from the vehicle (1), **characterised in that**:
the distance determining device (2, 30) is configured to be located at the stationary measurement reference point (3) and to direct the radiation beam (13) towards the remote target surface (4) located at the mobile measurement reference point (4), and
the odometer device (2) comprises communication means (7) for wirelessly communicating the measurement value to a data receiving means (7', 9) at the vehicle (1).

2. Odometer device (2) according to claim 1, comprising target tracking means (31, 33, 34, 37, 38) for training the beam (13) on the remote target surface (4) as the vehicle (1) moves.

3. Odometer device (2) according to claim 2, wherein the target tracking means (31, 33, 34, 37, 38) comprises target offset determining means (31) for determining an offset angle between an angular position of the remote target surface (4) relative to the stationary measurement reference point (3) and the transmission direction of the beam (13), and beam orientation adjustment means (33, 34, 37, 38) for automatically adjusting the transmission direction of the beam (13) in dependence on the offset angle.

4. Odometer device (2) according to claim 3, wherein the target offset determining means (31) comprises:
beam position determining means for determining a position of the beam (13),
optical image acquisition means (31) for acquiring an image of the remote target surface (4),
first pattern recognition means (31) for detecting, in the image, a predetermined pattern (11) of the remote target surface (4), and
pattern position determining means (31) for determining a position of the pattern (11),
wherein the target offset determining means (31) is configured for determining an offset distance (dₓ, d_{y}) between the positions of the beam (15) and the pattern (11).

5. Odometer device (2) according to claim 4, wherein the beam position determining means comprises second pattern recognition means for detecting, in the image, the reflection (15) of the beam (13).

6. Odometer device (2) according to claim 3, wherein the distance measuring device (30) comprises angular displacement drive means (34, 38) for rotational displacement (39, 40) of the beam (13) relative to a stationary mount (3), whereby the beam position determining means is configured to determine an angular orientation of the beam (13) from information from the transmission beam drive means (34, 38).

7. Odometer device (2) according to one of the preceding claims, wherein the instantaneous measurement value comprises an incremental change in the separation distance (Dₘ) since a previous distance measurement.

8. Odometer device (2) according to one of claims 4 to 7, wherein the optical image acquisition means, the first pattern recognition means and/or the second pattern recognition means comprise an optical or digital zoom means for varying the scale of the image, the pattern (11) or the reflection (15) in dependence on the separation distance (Dₘ).

9. Odometer device (2) according to claim 6, wherein the drive means (34, 38) comprises means for varying a displacement resolution of the drive means (34, 38) in dependence on the separation distance (Dₘ).

10. Odometer device (2) according to one of the preceding claims, comprising means for detecting an out-of-range condition of the beam alignment with the target surface (4), wherein the communication means (7) is configured to stop communicating the measured value in the event of said out-of-range condition.

11. Distance measuring system comprising a first odometer device (2) according to one of the preceding claims, and the said vehicle (1) provided with the said target surface (4), wherein the data receiving means (7') comprises offsetting or zeroing means (10, 9) for identifying a reference start point (21) for measuring a travelled distance (Dₜ) of the vehicle (1), and for determining the travelled distance (Dₜ), using subsequently received measurement values, with respect to the identified start point (21).

12. Distance measuring system according to claim 11, wherein the vehicle (1) is a marking apparatus (1) for applying a marking substance (14) to a ground surface.

13. Distance measuring system according to claim 12, wherein the marking apparatus (1) comprises a line-marking apparatus (1) for sports surfaces.

14. Distance measuring system according to one of claims 11 to 13, comprising a control means (9) for controlling a speed of the vehicle, or an operational parameter of an equipment of the vehicle, in dependence on the travelled distance (Dₜ).

15. Distance measurement system according to one of claims 11 to 14, further comprising second and/or odometer devices (2) according to claims 1 to 10, the radiation beams (13₁, 13₂, 13₃) of the first, second and/or third odometers (2) being oriented to different target surfaces or different regions (11₁, 11₂, 11₃) of the same target surface (4), wherein the distance measurement system comprises target orientation determining means (31) for, using first, second and/or third measurement values from the first, second and/or third odometer devices (2), determining an spatial orientation of the target surface (4), the target surfaces and/or the vehicle (1).
